(19) Europäisches Patentamt
European Patent Office
Office européen des brevets

(11) **EP 4 275 402 B1**

(12) **EUROPEAN PATENT SPECIFICATION**

(45) Date of publication and mention
of the grant of the patent:
**30.04.2025 Bulletin 2025/18**

(21) Application number: **21700134.6**

(22) Date of filing: **05.01.2021**

(51) International Patent Classification (IPC):
$H04W\ 52/22^{(2009.01)}$    $H04W\ 52/32^{(2009.01)}$
$H04W\ 52/36^{(2009.01)}$    $H04W\ 52/14^{(2009.01)}$
$H04W\ 72/04^{(2023.01)}$    $H04W\ 16/14^{(2009.01)}$
$H04W\ 72/12^{(2023.01)}$

(52) Cooperative Patent Classification (CPC):
**H04W 52/225; H04W 16/14; H04W 52/325;**
H04W 52/143; H04W 52/367

(86) International application number:
**PCT/IB2021/050049**

(87) International publication number:
**WO 2022/148987 (14.07.2022 Gazette 2022/28)**

(54) **POWER BUDGET HANDLING IN DYNAMIC SPECTRUM SHARING WITH REFERENCE SIGNAL POWER BOOSTING**

HANDHABUNG VON LEISTUNGSBUDGET BEI DYNAMISCHER SPEKTRUMSTEILUNG MIT REFERENZSIGNALLEISTUNGSVERSTÄRKUNG

GESTION DU BUDGET DE PUISSANCE EN PARTAGE DYNAMIQUE DU SPECTRE AVEC RENFORCEMENT DE PUISSANCE DE SIGNAL DE RÉFÉRENCE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**15.11.2023 Bulletin 2023/46**

(73) Proprietor: **Telefonaktiebolaget LM Ericsson (publ)**
**164 83 Stockholm (SE)**

(72) Inventors:
• **AFANA, Ali**
**Kanata, Ontario K2K 3B4 (CA)**
• **MANN, Karl**
**Ottawa, Ontario K2J 3C4 (CA)**

(74) Representative: **Ericsson**
**Patent Development**
**Torshamnsgatan 21-23**
**164 80 Stockholm (SE)**

(56) References cited:
**GB-A- 2 572 651**

• **LG ELECTRONICS: "Discussion on NR-LTE coexistence for DL transmission", vol. RAN WG1, no. Spokane, USA; 20170403 - 20170407, 2 April 2017 (2017-04-02), XP051243072, Retrieved from the Internet <URL:http://www.3gpp.org/ftp/ Meetings_3GPP_SYNC/RAN1/Docs/> [retrieved on 20170402]**

**Description**

TECHNICAL FIELD

Wireless communication and in particular, to power handling in spectrum sharing configurations between a first radio access technology (RAT) and second RAT.

BACKGROUND

Spectrum sharing is a technology that enables wireless technology entities to exploit existing Long Term Evolution (LTE), also referred to as 4th Generation (4G), spectrum bands to transition to 5th Generation (5G) New Radio (NR) applications without the extra expenses of acquiring new 5G NR spectrum or 5G radio and baseband hardware. Spectrum sharing allows LTE and NR to concurrently coexist and share the spectrum in a single band with minimal impact on LTE performance.

There are several possible spectrum sharing techniques between NR and LTE radio access technologies (RATs) that can be adopted on a static frequency division multiplexing (FDM) or time division multiplexing (TDM) basis, as well as dynamic or instantaneous sharing on a TDM basis.

The spectrum sharing between LTE and NR transmissions is managed by avoiding the collision with LTE dedicated signals including Cell-specific reference signals (CRS), and sync block signals e.g., primary synchronization signals (PSS)/secondary synchronization signals (SSS). Spectrum sharing can be performed on a resource element (RE) level or on a symbol-resource block level.

RE level spectrum sharing may be used for rate matching around the always-transmitted CRS LTE signals. Meanwhile, symbol-resource block level may be used to block certain resource blocks, RBs, from colliding with dedicated LTE signals such as LTE PSS/SSS. These block-based patterns may be expressed by two bit maps; namely, a frequency domain bit map with granularity of one RB and a time domain bit map with granularity of one OFDM symbol.

Further, in LTE, there is the possibility of boosting the CRS power. A problem with power boosting is the danger of power over allocation of a radio unit (RU) at a node. There are two incidents/levels where the RU can be over-allocated in power, and the RF output power exceeds, for example, 40W (40W RU), on the symbol level (72us) and in mean power over several subframes $\geq 10$ level. At the symbol level, clipping of power peaks may occur in the RU, and the error vector magnitude (EVM) increases. In case of over-allocating mean power, the RU gets overheated, and the power amplifier saturates at a lower level, which negatively affects communication.

However, it may also be beneficial to utilize as much power as possible of the total RF power, for example, 40W, for transmission of physical channels since, theoretically, the capacity of a radio channel increases directly when the power per symbol is increased (Shannon's theorem). Therefore, the capacity of the channels could be increased if full power could be utilized.

When the power of the CRS is varying, there is a possibility to increase or decrease the power in the REs in the same symbol where the CRS is located. This corresponds to the PDSCH type B REs. The power of PDSCH type B REs can be varied according to the Third Generation Partnership Project (3GPP) parameter $P_B$ that specifies a power relation (pdschTypeBGain *or* $P_B / P_A$ ) between PDSCH type A and PDSCH type B resources elements. The power is set relatively to the power level of the resource elements of PDSCH type A. The values may only be in the range crsGain= [6, 4.77 3, 1.77,0,-1,-2,-3] [dB]. For example, crsGain=3 means that the CRS power is 3dB higher than the power of a resource element for PDSCH type A. PDSCH type A corresponds to REs within a symbol (72us) that does not contain CRSs in the air interface.

A network node, such as an eNB, has to transmit the 3GPP parameters to the wireless device where the 3GPP parameters include the following:

•

$$P_A = - \text{crsGain}$$

• $P_B$ = (0-3) from table 1 below
$P_B$ is a common cell parameter that is broadcasted in SIB2.
$P_A$ = - crsGain is a dedicated wireless device parameter and is sent the first time in a RRCConnectionSetup message, and later in a
RRCConnectionReconfiguration message. Also in the
RRCConnectionReestablishment message.

Table 1: the cell-specific ratio $P_B / P_A$ for 1, 2 or 4 cell specific antenna ports.

| $P_B$ | $\rho_B/\rho_A$ | |
|---|---|---|
| | One Antenna Port | Two and Four Antenna Ports |
| 0 | 1 | 5/4 |
| 1 | 4/5 | 1 |
| 2 | 3/5 | 3/4 |
| 3 | 2/5 | 1/2 |

Normally $P_B$ is specified first by SIB2 and $P_A$ is determined by Table 1, and may be specified later in a RRC message (e.g., RRC Connection Setup, RRC Connection Reconfiguration).

For the wireless device, the issues of over-allocation are not present, and $P A$ only defines a power relation between CRS and PDSCH for demodulation purposes.

However, in LTE, one general guideline has been that all RE's for all types of physical channels have the same power = Pref = $P_A$ (reference level). In general, in order to boost or allow REs to deviate from the reference level, there must be empty REs with zero power such that other non-zero REs can get increased power without over-allocation on symbol level, i.e., the non-zero power REs can take the power that would have been used in the REs with zero power, i.e., empty REs. Empty REs occur when the number of TX antennas is $\geq$ 2, when CRS is transmitted from neighboring antennas.

When the power of the CRS is varying, there is a possibility to increase or decrease the power in the REs in the same symbol where the CRS is located. This corresponds to the PDSCH type B REs. The power of these can be varied according to the 3GPP parameter $P_B$ that specifies a power relation (pdschTypeBGain) between PDSCH type A and PDSCH type B resources elements.

Decreasing the RE power of PDSCH type B, can be used to decrease over-allocation on symbol power or mean power for high CRS boost levels. Increasing the RE power of PDSCH type B can be used to improve power utilization for low boost levels.

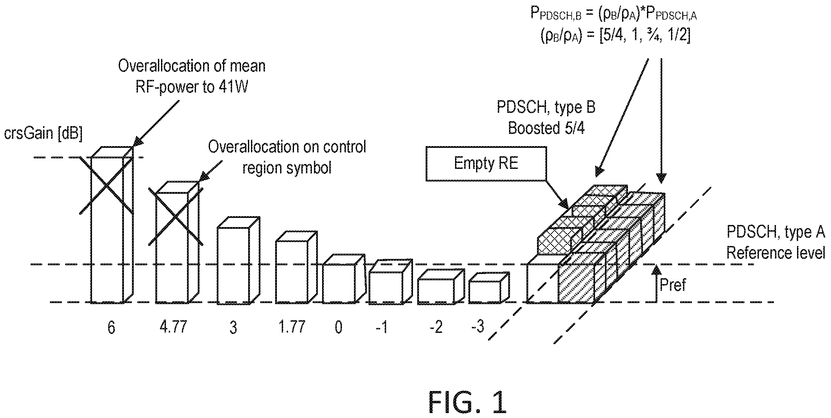

With less than or equal 3.0 dB CRS power boost, the power is taken from the position where the CRS is blanked where the other antenna port is sending it. Thus, its moving it from one blank CRS position to another. With +4.77 or +6 dB power boost, there could be an issue as PDSCH $PA$ or $PB$ (as described in 3GPP Technical Specification 36.331 PDSCH-Config field descriptions) may have to be set lower. FIG. 1 is a diagram of serveral examples of various CRS gains for LTE CRS power boosting where over-allocation may occur.

In dynamic spectrum sharing (DSS), since the CRS is spread for the entire bandwidth, but LTE PDSCH type B is narrower such that spectrum is shared, LTE can no longer be counted on to balance the power budget. When a LTE assigns a low bandwidth (BW), but NR is assigned the rest of PDSCH, the LTE network node currently does not know about this NR borrowing of power such that power over-allocation may occur.

Another issue occurs when the CRS is boosted where over-allocation may occur on symbols where there are REs that do not belong to PDSCH type B, which are not scalable. This may occur in DSS in the region where NR PDSCH/PDCCH is scheduled instead of LTE PDSCH.

In one more case, when the NR PDSCH is boosted (e.g., uses full power over quarter BW in non-CRS symbols), there is much less power in CRS symbols where there should not be a NR PDSCH power reduction in non-CRS symbols.

Therefore, over-allocation in spectrum shared between two radio access technologies (RATs) is an issue that has not been addressed by existing systems owing to the lackof communications between RATs (e.g., between LTE and NR) regarding power modification. As a result, over-allocation may occur.

Patent application GB 2572651 AI proposes a method for improving interference co-ordination between different types of RAN nodes in a radio access network.

SUMMARY

Some embodiments advantageously provide a method and system for power handling in spectrum sharing configurations between a first RAT and second RAT, according to the independent claims. Further embodiments are defined in the dependent claims.

In legacy LTE, the CRS power boosting is managed according to the 3GPP parameter $P_B$ that specifies a power relation (pdschTypeBGain) between PDSCH type A and PDSCH type B resources elements. In a spectrum sharing solution between LTE and NR, LTE can no longer be counted on to balance the power budget and avoid power over-allocation in the radio, etc.. The present disclosure, in some embodiments, advantageously blanks a few PDSCH resource blocks (RBs) or even less than a RB in the shared NR region or applies a power back-off to allow scaling of the power of symbols that have CRS within them. The present disclosure, in some embodiments, advantageously allows scaling of the symbols that have CRS rate matching.

One or more of the following advantages may be provided by one or more of the embodiments described herein:

- To avoid over-subscribing the power budget in the CRS symbols, NR may have to use fewer PDSCH RBs, or else have a power back-off;
- Long term, 3GPP may be modified to allow scaling of the symbols that have CRS rate matching, as was performed in LTE only systems;
- Decreasing the RE power of PDSCH type B or NR PDSCH, can be used to decrease over-allocation on symbol power or mean power, for high CRS boost levels; and
- Increasing the RE power of PDSCH type B/NR PDSCH can be used to improve power utilization for low boost levels.

BRIEF DESCRIPTION OF THE DRAWINGS

A more complete understanding of the present embodiments, and the attendant advantages and features thereof, will be more readily understood by reference to the following detailed description when considered in conjunction with the accompanying drawings wherein:

FIG. 1 is a diagram of serveral examples of various CRS gains for LTE CRS power boosting where over-allocation may occur

FIG. 2 is a schematic diagram of an example network architecture illustrating a communication system according to the principles in the present disclosure;

FIG. 3 is a block diagram of entities in the communication system according to some embodiments of the present disclosure;

FIG. 4 is a flowchart of an example process in a first RAT network node according to some embodiments of the present disclosure;

FIG. 5 is a flowchart of an example process in a second RAT network node according to some embodiments of the present disclosure;

FIG. 6 is a diagram of an example of power configurations within an overlapping bandwidth between a first RAT and a second RAT according to some embodiments of the present disclosure;

FIG. 7 is a diagram of an example of power configurations within an overlapping bandwidth between a first RAT and a second RAT according to some embodiments of the present disclosure; and

FIG. 8 is a diagram of a downlink PRB allocation in a non-MBSFN subframe according to some embodiments of the present disclosure.

DETAILED DESCRIPTION

The present disclosure provides, in some embodiments, a rule/formula/signaling that may reduce NR PDSCH power such as in CRS symbols in order to stay within a power budget.

Before describing in detail example embodiments, it is noted that the embodiments reside primarily in combinations of apparatus components and processing steps related to power handling in spectrum sharing configurations between a first RAT and second RAT. Accordingly, components have been represented where appropriate by conventional symbols in the drawings, showing only those specific details that are pertinent to understanding the embodiments so as not to obscure the disclosure with details that will be readily apparent to those of ordinary skill in the art having the benefit of the description herein.

As used herein, relational terms, such as "first" and "second," "top" and "bottom," and the like, may be used solely to distinguish one entity or element from another entity or element without necessarily requiring or implying any physical or logical relationship or order between such entities or elements. The terminology used herein is for the purpose of describing particular embodiments only and is not intended to be limiting of the concepts described herein. As used herein, the singular forms "a", "an" and "the" are intended to include the plural forms as well, unless the context clearly indicates otherwise. It will be further understood that the terms "comprises," "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

In embodiments described herein, the joining term, "in communication with" and the like, may be used to indicate electrical or data communication, which may be accomplished by physical contact, induction, electromagnetic radiation, radio signaling, infrared signaling or optical signaling, for example. One having ordinary skill in the art will appreciate that multiple components may interoperate and modifications and variations are possible of achieving the electrical and data communication.

In some embodiments described herein, the term "coupled," "connected," and the like, may be used herein to indicate a connection, although not necessarily directly, and may include wired and/or wireless connections.

The term "network node" used herein can be any kind of network node comprised in a radio network which may further comprise any of base station (BS), radio base station, base transceiver station (BTS), base station controller (BSC), radio network controller (RNC), g Node B (gNB), evolved Node B (eNB or eNodeB), Node B, multi-standard radio (MSR) radio node such as MSR BS, multi-cell/multicast coordination entity (MCE), integrated access and backhaul (IAB) node, relay node, donor node controlling relay, radio access point (AP), transmission points, transmission nodes, Remote Radio Unit (RRU) Remote Radio Head (RRH), a core network node (e.g., mobile management entity (MME), self-organizing network (SON) node, a coordinating node, positioning node, MDT node, etc.), an external node (e.g., 3rd party node, a node external to the current network), nodes in distributed antenna system (DAS), a spectrum access system (SAS) node, an element management system (EMS), etc. The network node may also comprise test equipment. The term "radio node" used herein may be used to also denote a wireless device (WD) such as a wireless device (WD) or a radio network node.

In some embodiments, the non-limiting terms wireless device (WD) or a user equipment (UE) are used interchangeably. The WD herein can be any type of wireless device capable of communicating with a network node or another WD over radio signals, such as wireless device (WD). The WD may also be a radio communication device, target device, device to device (D2D) WD, machine type WD or WD capable of machine to machine communication (M2M), low-cost and/or low-complexity WD, a sensor equipped with WD, Tablet, mobile terminals, smart phone, laptop embedded equipped (LEE), laptop mounted equipment (LME), USB dongles, Customer Premises Equipment (CPE), an Internet of Things (IoT) device, or a Narrowband IoT (NB-IOT) device, first RAT (e.g., 5G or NR) enabled wireless device, second RAT (e.g., LTE) enabled wireless device, dual connectivity wireless device (i.e., wireless device enabled with both the first RAT and second RAT), etc.

Also, in some embodiments the generic term "radio network node" is used. It can be any kind of a radio network node which may comprise any of base station, radio base station, base transceiver station, base station controller, network controller, RNC, evolved Node B (eNB), Node B, gNB, Multi-cell/multicast Coordination Entity (MCE), IAB node, relay node, access point, radio access point, Remote Radio Unit (RRU) Remote Radio Head (RRH).

Note that although terminology from one particular wireless system, such as, for example, 3GPP LTE and/or New Radio (NR), may be used in this disclosure, this should not be seen as limiting the scope of the disclosure to only the aforementioned system. Other wireless systems, including without limitation Wide Band Code Division Multiple Access (WCDMA), Worldwide Interoperability for Microwave Access (WiMax), Ultra Mobile Broadband (UMB) and Global System for Mobile Communications (GSM), may also benefit from exploiting the ideas covered within this disclosure.

Note further, that functions described herein as being performed by a wireless device or a network node may be distributed over a plurality of wireless devices and/or network nodes. In other words, it is contemplated that the functions of the network node and wireless device described herein are not limited to performance by a single physical device and, in fact, can be distributed among several physical devices.

References herein to an NR wireless device refer to a wireless device engaging in or configured to engage in communication with a network node using the 3GPP NR wireless communication standard. References herein to an LTE wireless device refer to a wireless device engaging in or configured to engage in communication with a network node using the 3GPP LTE wireless communication standard. References herein to a first RAT network node refer to a network node engaging in or configured to engage in communication with another network element using a first RAR. References herein to a second RAT network node refer to a network node engaging in or configured to engage in communication with another network element using a second RAT. The second RAT may be different from the first RAT.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

Some embodiments provide power handling in spectrum sharing configurations between a first RAT and second RAT.

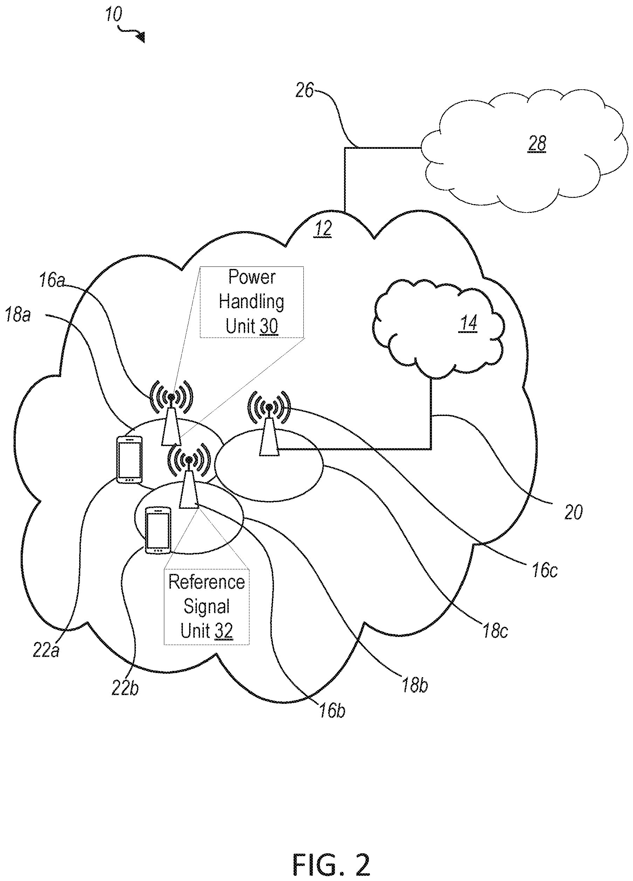

Referring again to the drawing figures, in which like elements are referred to by like reference numerals, there is shown in FIG. 2 a schematic diagram of a communication system 10, according to an embodiment, such as a 3GPP-type cellular network that supports standards such NR (5G, a first RAT) and LTE (i.e., a second RAT) such as for spectrum sharing among the two RATs, which comprises an access network 12, such as a radio access network, and a core network 14. The access network 12 comprises a plurality of network nodes 16a, 16b, 16c (referred to collectively as network nodes 16), such as NBs, eNBs, gNBs or other types of wireless access points, each defining a corresponding coverage area 18a, 18b, 18c (referred to collectively as coverage areas 18). In some embodiments, network node 16a is a first RAT network node 16 and network node 16b is a second RAT network node 16b. Each network node 16a, 16b, 16c is connectable to the core network 14 over a wired or wireless connection 20. A first wireless device (WD) 22a located in coverage area 18a is configured to wirelessly connect to, or be paged by, the corresponding network node 16a. A second WD 22b in coverage area 18b is wirelessly connectable to the corresponding network node 16b. While a plurality of WDs 22a, 22b (collectively referred to as wireless devices 22) are illustrated in this example, the disclosed embodiments are equally applicable to a situation where a sole WD is in the coverage area or where a sole WD is connecting to the corresponding network node 16. Note that although only two WDs 22 and three network nodes 16 are shown for convenience, the communication system may include many more WDs 22 and network nodes 16.

Also, it is contemplated that a WD 22 can be in simultaneous communication and/or configured to separately communicate with more than one network node 16 and more than one type of network node 16. For example, a WD 22 can have dual connectivity with a network node 16 that supports LTE and the same or a different network node 16 that supports NR. As an example, WD 22 can be in communication with an eNB, i.e., a second RAT network node 16, for LTE/E-UTRAN and a gNB, i.e., a first RAT network node, for NR/NG-RAN.

Connections between various entities in system 10 may extend via an optional intermediate network 28. The intermediate network 28 may be one of, or a combination of more than one of, a public, private or hosted network. The intermediate network 28, if any, may be a backbone network or the Internet. In some embodiments, the intermediate network 28 may comprise two or more sub-networks (not shown).

A network node 16a, for example, is configured to include a power handling unit 30 which is configured to perform one or more network node 16 functions as described herein such as with respect to power handling in spectrum sharing configurations between a first RAT and second RAT. A network node 16b, for example, is configured to include a reference signal unit 32 which is configured to perform one or more network node 16 functions as described herein such as with respect to power handling in spectrum sharing configurations between a first RAT and second RAT.

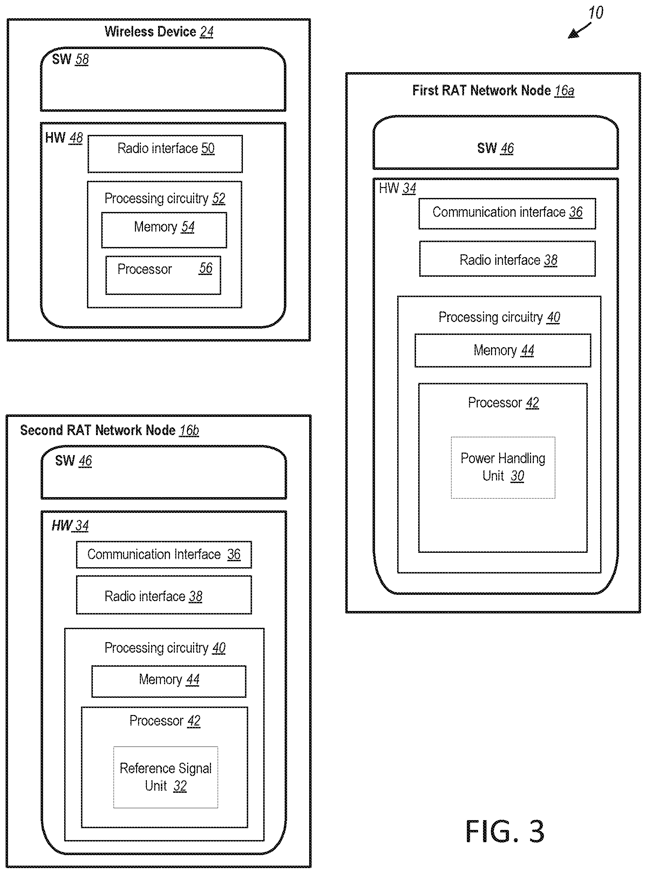

Example implementations, in accordance with an embodiment, of the WD 22 and network node 16 discussed in the preceding paragraphs will now be described with reference to FIG. 3. The communication system 10 includes a network node 16a provided in a communication system 10 and including hardware 34 enabling it to communicate with WD 22 and other network nodes 16. In some embodiments, network node 16a is an NR network node 16, i.e., a network node 16 that operates or is configured to operate using the 3GPP communication standard The hardware 34 may include a communication interface 36 for setting up and maintaining a wired or wireless connection with an interface of a different communication entities of the communication system 10, as well as a radio interface 38 for setting up and maintaining at least a wireless connection with a WD 22 located in a coverage area 18 served by the network node 16a. The radio interface 38 may be formed as or may include, for example, one or more RF transmitters, one or more RF receivers, and/or one or more RF transceivers. The communication interface 36 may be configured to facilitate a connection one or more entities in system 10 such as another network node 16 via a backhaul link. The connection may be direct or it may pass through a core network 14 of the communication system 10 and/or through one or more intermediate networks 28 outside the communication system 10.

In the embodiment shown, the hardware 34 of the network node 16a further includes processing circuitry 40. The processing circuitry 40 may include a processor 42 and a memory 44. In particular, in addition to or instead of a processor, such as a central processing unit, and memory, the processing circuitry 40 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 42 may be configured to access (e.g., write to and/or read from) the memory 44, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

Thus, the network node 16a further has software 46 stored internally in, for example, memory 44, or stored in external memory (e.g., database, storage array, network storage device, etc.) accessible by the network node 16a via an external connection. The software 46 may be executable by the processing circuitry 40. The processing circuitry 40 may be configured to control any of the methods and/or processes described herein and/or to cause such methods, and/or processes to be performed, e.g., by network node 16a. Processor 42 corresponds to one or more processors 42 for performing network node 16a functions described herein. The memory 44 is configured to store data, programmatic software code and/or other information described herein. In some embodiments, the software 46 may include instructions that, when executed by the processor 42 and/or processing circuitry 40, causes the processor 42 and/or processing circuitry 40 to perform the processes described herein with respect to network node 16a. For example, processing circuitry 40 of the network node 16a may include power handling unit 30 that is configured to perform one or more network node 16a functions as described herein. In one or more embodiments, network node 16a is a NR network node 16.

The communication system 10 includes a network node 16b provided in a communication system 10 and including hardware and software as described with respect to network node 16a. However, in one or more embodiments, processing circuitry 40 of the network node 16b may include reference signal unit 32 that is configured to perform one or more network node 16b functions as described herein. In one or more embodiments, network node 16b is a LTE network node 16, i.e., a network node 16 that operates or is configured to operate using the 3GPP communication standard.

The communication system 10 further includes the WD 22 already referred to. The WD 22 may have hardware 48 that may include a radio interface 50 configured to set up and maintain a wireless connection with a network node 16 serving a coverage area 18 in which the WD 22 is currently located. The radio interface 50 may be formed as or may include, for example, one or more RF transmitters, one or more RF receivers, and/or one or more RF transceivers.

The hardware 48 of the WD 22 further includes processing circuitry 52. The processing circuitry 52 may include a processor 56 and memory 54. In particular, in addition to or instead of a processor, such as a central processing unit, and memory, the processing circuitry 52 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 56 may be configured to access (e.g., write to and/or read from) memory 54, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

Thus, the WD 22 may further comprise software 58, which is stored in, for example, memory 54 at the WD 22, or stored in external memory (e.g., database, storage array, network storage device, etc.) accessible by the WD 22. The software 58 may be executable by the processing circuitry 52. The processing circuitry 52 may be configured to control any of the methods and/or processes described herein and/or to cause such methods, and/or processes to be performed, e.g., by WD 22. The processor 56 corresponds to one or more processors 56 for performing WD 22 functions described herein. The WD 22 includes memory 54 that is configured to store data, programmatic software code and/or other information described herein. In some embodiments, the software 58 may include instructions that, when executed by the processor 56 and/or processing circuitry 52, causes the processor 56 and/or processing circuitry 52 to perform the processes described herein with respect to WD 22.

In some embodiments, the inner workings of the network node 16 and WD 22 may be as shown in FIG. 3 and independently, the surrounding network topology may be that of FIG. 2.

Although FIGS. 2 and 3 show various "units" such as power handling unit 30 and reference signal unit 32 as being within a respective processor, it is contemplated that these units may be implemented such that a portion of the unit is stored in a corresponding memory within the processing circuitry. In other words, the units may be implemented in hardware or in a combination of hardware and software within the processing circuitry. In one or more embodiments, the functionality of first RAT network node 16a and second RAT network node 16b may be performed by a single network node 16 configured to provide communications in both RAT types.

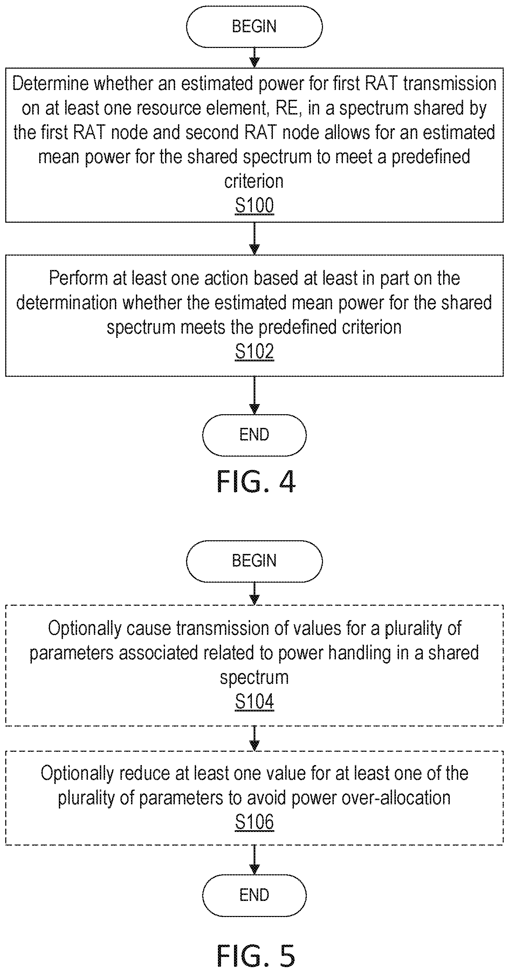

FIG. 4 is a flowchart of an example process in a network node 16a for power handling in spectrum sharing configurations between a first RAT and second RAT. One or more blocks described herein may be performed by one or more elements of network node 16a such as by one or more of processing circuitry 40, processor 42, radio interface 38, power handling unit 30 and/or communication interface 36. Network node 16 such as via processing circuitry 40 and/or processor 42 and/or radio interface 38 and/or power handling unit 30 and/or communication interface 36 is configured to determine (Block S100) whether an estimated power for first RAT transmission on at least one resource element, RE, in a spectrum shared by the first RAT network node 16a and second RAT network node 16b allows for an estimated mean power for the shared spectrum to meet a predefined criterion, as described herein. Network node 16 such as via processing circuitry 40 and/or processor 42 and/or radio interface 38 and/or power handling unit 30 and/or communication interface 36 is configured to perform (Block S102) at least one action based at least in part on the determination whether the estimated mean power for the shared spectrum meets the predefined criterion, as described herein.

According to one or more embodiments, the at least one action corresponds to indicating at least one power value associated with the estimated mean power for the shared spectrum where the indication of the at least one power value is based at least on the predefined criterion being met, as described herein. According to one or more embodiments, the at least one action includes modifying an estimated power for first RAT transmission on at least one resource element, RE, in a spectrum shared by the first RAT network node 16a and second RAT network node 16b where the modified estimated power for first RAT transmission allows the estimated mean power for the spectrum shared by the first RAT network node 16a and the second RAT network node 16b to meet the predefined criterion. The at least one action further includes causing first RAT transmission according to the modified estimated power.

According to one or more embodiments, the at least one action includes modifying the estimated power of at least a subset of symbols for first RAT transmission. According to one or more embodiments, the modifying of the estimated power for first RAT transmission includes one of decreasing resource element, RE, power for first RAT transmission to compensate for a cell-specific reference signals, CRS, gain level, and increasing RE power for first RAT transmission by using unused power in at least one RE in the shared spectrum. According to one or more embodiments, the at least one action includes modifying the estimated power includes lowering the estimated power for first RAT transmission.

According to one or more embodiments, the at least one action includes rate matching a physical downlink shared channel, PDSCH, associated with the first RAT network node 16a with REs associated with the second RAT network node 16b. According to one or more embodiments, the at least one action includes blanking at least one resource block, RB, symbol, RBS, in a RB in the spectrum shared by the first RAT network node 16a and the second RAT network node 16b. According to one or more embodiments, the processing circuitry 40 is further configured to prevent scheduling data transmission on the at least one RBS in the RB to perform the blanking. According to one or more embodiments, the at least one action includes reducing a power per resource element, RE, over a first plurality of REs associated with the first RAT network node 16a. A power per RE over a second plurality of REs associated with the second RAT network node 16b is reduced.

According to one or more embodiments, an amount of overall power reduced by the reduction of the power per RE over the first and second plurality of REs is at least one of less than and equal to 0.4 dB. According to one or more embodiments, the at least one action is configured to allow for a cell-specific reference signals, CRS, gain for a RE carrying CRS to be above a threshold. According to one or more embodiments, a power level for second RAT transmission in the spectrum shared by the first RAT network node 16a and second RAT network node 16b is fixed at a reference power level.

According to one or more embodiments, the spectrum shared by the first RAT network node 16a and second RAT network node 16b includes dedicated signaling for the second RAT network node 16b. According to one or more embodiments, the dedicated signaling corresponds to cell-specific reference signals, CRS. According to one or more embodiments, the processing circuitry 40 is further configured to receive a plurality of second RAT parameters associated with the estimated mean power for the spectrum shared by the first RAT network node 16a and second RAT network node 16b. The at least one action includes modifying the estimated power based on the plurality of second RAT parameters.

According to one or more embodiments, the plurality of second RAT parameters includes: a first parameter that specifies a power relation between a first type of physical downlink shared channel, PDSCH, resources and a second type of PDSCH resources, and a second parameter that specifies a reference power level for the second type of PDSCH resources. According to one or more embodiments, the first RAT transmission corresponds to physical downlink shared channel, PDSCH, transmission on a first type of PDSCH resources where the second RAT transmission corresponds to PDSCH transmission on a second type of PDSCH resources. According to one or more embodiments, the predefined criterion includes a maximum mean power limit where the predefined criterion is met based on a mean power being less than or equal to the maximum mean power limit.

FIG. 5 is a flowchart of an example process in a network node 16b related to power handling in spectrum sharing configurations between a first RAT and second RAT. One or more blocks described herein may be performed by one or more elements of network node 16a such as by one or more of processing circuitry 40, processor 42, radio interface 38, reference signal unit 32 and/or communication interface 36. Network node 16 such as via processing circuitry 40 and/or reference signal unit 32 and/or processor 42 and/or radio interface 38 and/or communication interface 36 is configured to optionally cause transmission (Block S104) of values for a plurality of parameters associated related to power handling in a shared spectrum, as described herein. For example, the second RAT network node 16b may communicate parameters such as PB and/or PA to the first RAT network node 16a in order for the first RAT network node 16a to determine whether and/or how to modify power and/or to communicate these parameters to the first RAT wireless device 22. Network node 16 such as via processing circuitry 40 and/or reference signal unit 32 and/or processor 42 and/or radio interface 38 and/or communication interface 36 is configured to optionally reduce (Block S106) at least one value for at least one of the plurality of parameters to avoid power over-allocation, as described herein

In one or more embodiments, the plurality of parameters includes $P_A$ and $P_B$, and/or the plurality of parameters may be transmitted to the first RAT network node 16a.

Having generally described arrangements for power handling in spectrum sharing configurations between a first RAT and second RAT, details for these arrangements, functions and processes are provided as follows, and which may be implemented by network nodes 16, e.g., network node 16a and network node 16b. In particular, one or more embodiments described herein provides coordination between a first RAT network node 16a (e.g., NR gNB) and a second RAT network node 16b (e.g., LTE eNb) where the second RAT network node 16b may communicate a plurality of second RAT parameters or power related parameters such as $P_B$ and $P_A$ to the first RAT network node 16a. In one or more embodiments, one or more of the parameters may indicate CRS power boost such that the first RAT network node 16a may perform power modification based on the indicated CRS power boost. The first RAT network node 16a may use these value for dynamic power modification and/or may communicate these values to a NR wireless device 22, for example.

Several methods are described herein and relate to:

- Method 1: communicating to NR wireless devices 22, which is an example of at least one action, as described herein.
- Method 2: leaving a few resources blank, which is another example of at least one action, as described herein.
- Method 3: reducing overall power by a small amount (for example the number of LTE RBs/number of NR RBs), which is yet another example of at least one action, as described herein.

The various methods may be performed by first RAT network node 16a and/or second RAT network node 16b.

**Method 1 (communicate to NR WDs 22):**

This is currently no definitive method in the 3GPP NR standard to manage the power allocation in a similar manner as is performed in networks operated using the 3GPP LTE standard. In particular, in one or more embodiments, the power values (also referred to as power parameters, RAT parameters, parameters and/or values) are communicated to the first RAT network node 16a, which may then be communicated to the NR wireless devices 22 (which may be a feature that may be added to the 3GPP standard), which can be performed through coordination between a first RAT network node (e.g., gNB) and second RAT network node 16b (e.g., eNB).

When assigning NR PDSCH in the region of LTE CRS, the first RAT (e.g., first RAT network node 16a) may skip the CRS resource elements and assign NR PDSCH around them to avoid collisions of NR PDSCH and LTE CRS. RE-Level rate matching pattern may be used based on 3GPP TS 5.1.4.2 of 38.214 v15.4.0.

In one or more embodiments, DSS may benefit from this coordination between the first RAT network node 16a and second RAT network node 16b, as described herein. When NR wireless device 22 is configured with CRS pattern, i.e., WD 22 is configured in RRCReconfiguration with LTE CRS rate matching that make NR wireless devices 22 aware of LTE CRS for the purpose of NR PDSCH rate matching (instead of puncturing), the first RAT network node 16a such as by one or more of processing circuitry 40, processor 42, radio interface 38 and/or power handling unit 30 and/or communication interface 36 can also get the values of $P_A$, $P_B$ that LTE wireless devices 22 are configured with and adapt the NR REs power values accordingly in the NR part of the spectrum where CRSs coexist, i.e., the first RAT network node 16a is able to perform power modification for the first RAT wireless device 22 using values communicated to it by the second RAT network node 16b. In one or more embodiments, the second RAT network node 16b (i.e., LTE eNB) can to lower the values of $P_A$, $P_B$ to levels that avoid the power over-allocation per symbol/and or mean power, where, for example, these lowered/reduced values may be communicated to the first RAT network node 16a.

In one or more embodiments, it is sufficient to look at the following to determine whether power over-allocation exist or may occur:

    1. control region assuming all RE's, except CRS, at PREF;
    2. Symbols with PDSCH type B + CRS (symbols with CRS); and
    3. Symbols with PDSCH type A (symbols without CRS).

In case LTE is operating or is configured to operate without power overallocation with, for example, crsGain=3 dB within the overlapping BW between LTE and NR, the power values may still need to be communicated to the NR wireless devices 22 such as by one or more of processing circuitry 40, processor 42, radio interface 38 and/or power handling unit 30 and/or communication interface 36 to avoid any power over-allocation.

### Example 1 (crsGain=3 dB, pdschTypeBGain =1)

    If pdschTypeBGain =1 full allocation is obtained.
    PRS (2*Pref)+PPDSCH_B (4*1*Pref)=6*Pref.
    PMEAN=39.97 [W] 39.9695 (BW=10MHz).

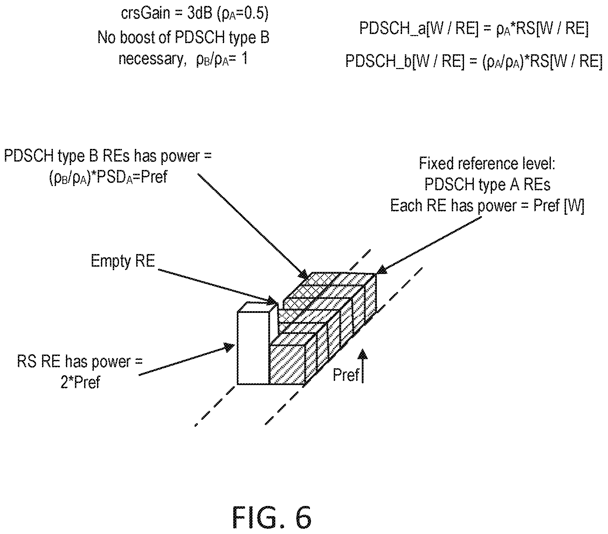

In this case, the energy in all empty REs caused by RS transmitted on other antennas is used. The empty REs in SSS/PSS symbols and the second symbol in PBCH corresponds to the power PREF*(2 subframes*20 [Pref]+6[RB]*4 Pref)/140= 0.0305 [W], and added to PMEAN result in a total mean power of 39.9695+0.0305=40.0000[W]. Example 1 is illustrated in FIG. 6.

In case of crsGain=6, 4.77, 3 dB, there will be power overallocation in some cases of pdschTypeBGain e.g., 5/4 etc. Below some examples:

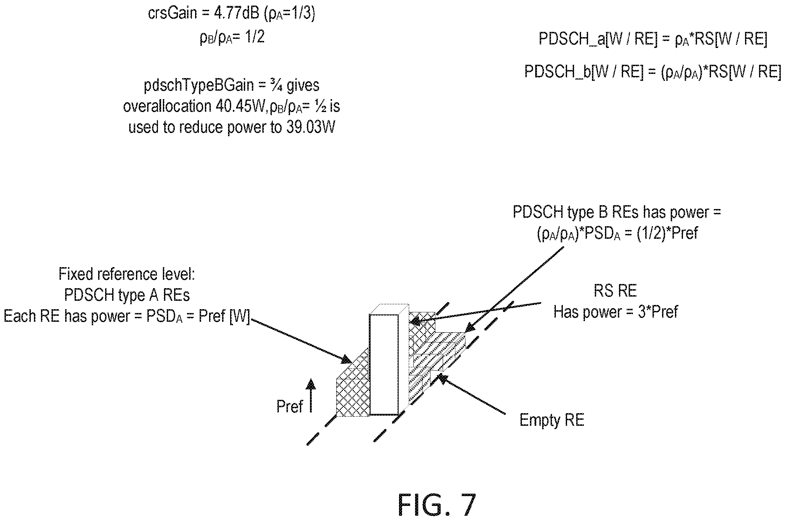

### Example 2: crsGain=4.77dB, pdschTypeBGain=3/4 (FIG. 7):

    If pdschTypeBGain= 3/4, full allocation is obtained in PDSCH.
    Region PCRS (3*Pref)+PPDSCH_B (4*(3/4)*Pref)=6Pref.
    pdschTypeBGain=3/4 results in over-allocation of mean power, since there is in addition 0.67dB extra in the control region, symbol 0, (independent of BW). So the total mean power equals:

    Pmean=40.45[W] for 10MHz BW where 40W is assumed to be the limit.
    The pdschTypeBGain in this example needs to be lowered to ½ (pdschTypeBGain = 1/2), which gives PMEAN=38.99 [W] (BW=10MHz).

In particular, in FIG. 7, if the $P_B$, $P_A$ values are coordinated with the first RAT, and the level of power of NR PDSCH REs can be reduced to avoid the over-allocation while still using the crs power boost of pdschTypeBGain =3/4. In another example, this pdschTypeBGain is lowered to for instance pdschTypeBGain = 1/2.

**Example 3 (crsGain=3.0dB, with pdschTypeBGain=5/4):**

In another example, crsGain=3.0dB with pdschTypeBGain=5/4. This will cause over allocation in all PDSCH type B symbols and $P_{MEAN}$= 40.43 W. Coordination of the second RAT network node 16b with the first RAT network node 16a may help avoid this coordination by reducing PDSCH type B to one such as to lead to full allocation in PDSCH type B symbols.

In another example, to fully utilize the power, if crsGain=0dB, -1dB, -2dB, - 3dB, pdschTypeBGain=5/4 can be used to get maximum utilization and there will still be a gap to boost the NR PDSCH REs both within the symbols that have CRS as well as symbols without CRS.

In other words, since the coordination between the first RAT and the second RAT exists in 3GPP for CRS rate matching, the disclosure advantageously adds new functionality to this coordination to communicate parameters such as LTE parameters $P_B$, $P_A$ and also helps avoid power over-allocation in DSS such as based on the communicated parameters, which may indicate CRS power boost, if any.

In case of non-capable wireless devices 22, i.e., early wireless devices may not be equipment with one or more of the functions described herein, some PRBs may be blanked to reduce overall power allocation, which leads us to the second method, i.e., Method 2.

**Method 2**

The power is equally distributed among REs and is dependent on the BW of the channel. The number of RBs in NR is larger than number of RBs in LTE for same channel bandwidth, e.g., in 10MHz BW, number of RBs in LTE is 50 while in NR the number of RBs is 52. Then there are extra two RBs in NR that do not have CRS in them. This may also need to be accounted for when balancing the power per symbol in DSS.

In order to help avoid increasing signaling and help reduce the complexity of exchanging info between the first RAT and second RAT, PRB blanking may be used such as by the first RAT network node 16a, i.e., one or more RBs are kept blank to balance the power and avoid overallocation with the need to account for LTE in order to know the exact CRS power boost or PDSCH REs powers. There is a tradeoff between NR spectral efficiency and reducing signaling and protecting LTE as a higher priority.

PDSCH resource mapping with RB symbol level granularity may be used and may be based on 3GPP TS 38.214 5.1.4.1. In particular, certain RBS are blanked to avoid power overflow. The RRC message is described in 3GPP TS 38.331 6.3.2. In this case, the whole RB may not need to be blanked such that a small part or subset or portion of the RB may be blanked based on amount of the overflow of the power. This can be calculated based on the channel BW used in the DSS cell.

In one or more embodiments, the RB blanking is performed through the NR scheduler at the first RAT network node 16a by not scheduling any data in certain RB based on the available BW especially is there is coordination between LTE and NR schedulers in DSS.

**Method 3 (overall slight power degradation):**

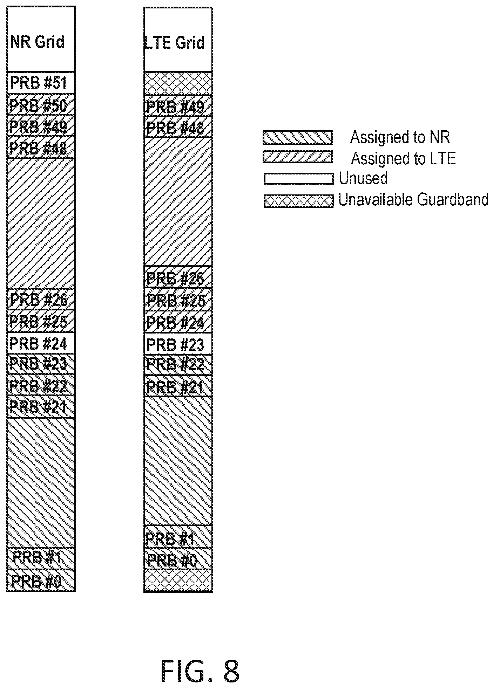

As described in some of the previous examples, when there is a small delta between the second RAT (i.e., LTE) and the first RAT (i.e., NR) overall power allocation, one method may be to reduce the overall power by decreasing the power per resource element (REs) slightly over all REs in both the first RAT and second RAT. The amount of power reduce should be small or minimal amounts as indicated in the previous examples of about 0.3-0.4 dB from the overall total power. In one or more embodiments, the amount is equal to the (number of LTE RBs/number of NR RBs). Further, in one or more embodiments, the downlink allocation of PRBs may be split 50-50% in 10 Mhz bandwidth in a non-MBSFN subframe as illustrated in FIG. 8.

Therefore, in one or more embodiments, spectrum sharing between a first RAT (i.e., LTE) and a second RAT (i.e., NR) is provided where the power budget is kept within the limit in order to help prevent over-allocation of mean power and per symbol power that may cause radio overheating and EVM. One or more embodiments may be performed through one or more of NR RB blanking, power back-off, and signaling between LTE and NR for coordination between the two RATs such as via the signaling of parameters, for example.

| Abbreviation | Explanation |
| --- | --- |
| CRS | Common reference signal |
| CSI-RS | Channel state information reference signal |
| LTE | Long term evolution |
| NR | New radio |
| NSA | Non-standalone |
| OFDM | Orthogonal frequency division multiplexing |
| PBCH | Physical broadcast channel |
| PDCCH | Physical downlink control channel |
| PDSCH | Physical downlink shared channel |
| PRACH | Physical random access channel |
| PSS | Primary synchronization signal |
| RB | Resource block |
| SSB | Synchronization signal block |
| SSS | Secondary synchronization signal |
| TRS | Tracking reference signal |

As will be appreciated by one of skill in the art, the concepts described herein may be embodied as a method, data processing system, and/or computer program product. Accordingly, the concepts described herein may take the form of an entirely hardware embodiment, an entirely software embodiment or an embodiment combining software and hardware aspects all generally referred to herein as a "circuit" or "module." Furthermore, the disclosure may take the form of a computer program product on a tangible computer usable storage medium having computer program code embodied in the medium that can be executed by a computer. Any suitable tangible computer readable medium may be utilized including hard disks, CD-ROMs, electronic storage devices, optical storage devices, or magnetic storage devices.

Some embodiments are described herein with reference to flowchart illustrations and/or block diagrams of methods, systems and computer program products. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable memory or storage medium that can direct a computer or other programmable data processing apparatus to function in a particular manner, such that the instructions stored in the computer readable memory produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and/or block diagram block or blocks. It is to be understood that the functions/acts noted in the blocks may occur out of the order noted in the operational illustrations. For example, two blocks shown in succession may in fact be executed substantially concurrently or the blocks may sometimes be executed in the reverse order, depending upon the functionality/acts involved. Although some of the diagrams include arrows on communication paths to show a primary direction of communication, it is to be understood that communication may occur in the opposite direction to the depicted arrows.

Computer program code for carrying out operations of the concepts described herein may be written in an object oriented programming language such as Java® or C++. However, the computer program code for carrying out operations of the disclosure may also be written in conventional procedural programming languages, such as the "C" programming language. The program code may execute entirely on the user's computer, partly on the user's computer, as a stand-alone software package, partly on the user's computer and partly on a remote computer or entirely on the remote computer. In the latter scenario, the remote computer may be connected to the user's computer through a local area network (LAN) or a wide area network (WAN), or the connection may be made to an external computer (for example, through the Internet using an Internet Service Provider).

Many different embodiments have been disclosed herein, in connection with the above description and the drawings.

It will be appreciated by persons skilled in the art that the embodiments described herein are not limited to what has been particularly shown and described herein above. In addition, unless mention was made above to the contrary, it should be noted that all of the accompanying drawings are not to scale. A variety of modifications and variations are possible in light of the above teachings without departing from the scope of the following claims.

**Claims**

1.  A method implemented by a first radio access technology, RAT, network node (16a), for spectrum sharing with a second RAT network node (16b), the method comprising:

    determining whether an estimated power for first RAT transmission on at least one resource element, RE, in a spectrum shared by the first RAT network node (16a) and second RAT network node (16b) allows for an estimated mean power for the shared spectrum to meet a predefined criterion; and
    performing at least one action based at least in part on the determination whether the estimated mean power for the shared spectrum meets the predefined criterion,
    wherein:

       - the at least one action is configured to allow for a cell-specific reference signals, CRS, gain for a RE carrying CRS to be above a threshold; and
       - the at least one action includes reducing a power per resource element, RE, over a first plurality of REs associated with the first RAT network node (16a); and a power per RE over a second plurality of REs associated with the second RAT network node (16b) being reduced.

2.  The method of Claim 1, wherein an amount of overall power reduced by the reduction of the power per RE over the first and second plurality of REs is at least one of less than and equal to 0.4 dB.

3.  The method of Claim 1 or 2, wherein a power level for second RAT transmission in the spectrum shared by the first RAT network node (16a) and second RAT network node (16b) is fixed at a reference power level.

4.  The method of any one of Claims 1 to 3, wherein the spectrum shared by the first RAT network node (16a) and second RAT network node (16b) includes dedicated signaling for the second RAT network node (16b).

5.  The method of Claim 4, wherein the dedicated signaling corresponds to cell-specific reference signals, CRS.

6.  The method of any one of Claims 1 to 5, further comprising receiving a plurality of second RAT parameters associated with the estimated mean power for the spectrum shared by the first RAT network node (16a) and second RAT network node (16b); and
    the at least one action including modifying the estimated power based on the plurality of second RAT parameters.

7.  The method of Claim 6, wherein the plurality of second RAT parameters includes:

    a first parameter that specifies a power relation between a first type of physical downlink shared channel, PDSCH, resources and a second type of PDSCH resources; and
    a second parameter that specifies a reference power level for the second type of PDSCH resources.

8.  The method of any one of Claims 1 to 7, wherein the first RAT transmission corresponds to physical downlink shared channel, PDSCH, transmission on a first type of PDSCH resources; and
    the second RAT transmission corresponds to PDSCH transmission on a second type of PDSCH resources.

9.  The method of any one of Claims 1 to 8, wherein the predefined criterion includes a maximum mean power limit, the predefined criterion being met based on a mean power being less than or equal to the maximum mean power limit.

10. A computer-readable medium (44) comprising code portions which, when executed on a processor (42) of a first radio access technology, RAT, network node (16a), configure the processor to perform the steps of a method according to any one of claims 1 to 9.

11. A first radio access technology, RAT, network node (16a), for spectrum sharing with a second RAT network node (16b), the first RAT network node (16a) includes:
processing circuitry (40) configured to perform all steps of a method according to any one of claims 1 to 9.

**Patentansprüche**

1. Verfahren, das durch einen ersten Funkzugangstechnologie-Netzwerkknoten, RAT-Netzwerkknoten, (16a) implementiert wird, für eine gemeinsame Nutzung eines Spektrums mit einem zweiten RAT-Netzwerkknoten (16b), das Verfahren umfassend:

   Bestimmen, ob eine geschätzte Leistung für die erste RAT-Übertragung auf mindestens einem Ressourcenelement, RE, in einem Spektrum, das durch den ersten RAT-Netzwerkknoten (16a) und den zweiten RAT-Netzwerkknoten (16b) gemeinsam genutzt wird, es zulässt, dass eine geschätzte mittlere Leistung für das gemeinsam genutzte Spektrum ein vordefiniertes Kriterium erfüllt; und
   Durchführen von mindestens einer Aktion, die mindestens teilweise auf der Bestimmung basiert, ob die geschätzte mittlere Leistung für das gemeinsam genutzte Spektrum das vordefinierte Kriterium erfüllt, wobei:

      - die mindestens eine Aktion konfiguriert ist, um es zuzulassen, dass eine Verstärkung von zellenspezifischen Referenzsignalen, CRS, für eine RE, die CRS trägt, über einem Schwellenwert liegt; und
      - die mindestens eine Aktion ein Reduzieren einer Leistung pro Ressourcenelement, RE, über eine erste Vielzahl von REs einschließt, die mit dem ersten RAT-Netzwerkknoten (16a) verknüpft sind; und eine Leistung pro RE über eine zweite Vielzahl von REs, die mit dem zweiten RAT-Netzwerkknoten (16b) verknüpft sind, reduziert wird.

2. Verfahren nach Anspruch 1, wobei eine Menge an Gesamtleistung, die durch die Reduzierung der Leistung pro RE über die erste und die zweite Vielzahl von REs reduziert wird, mindestens eines von weniger als und gleich 0,4 dB beträgt.

3. Verfahren nach Anspruch 1 oder 2, wobei ein Leistungspegel für die zweite RAT-Übertragung in dem Spektrum, das durch den ersten RAT-Netzwerkknoten (16a) und den zweiten RAT-Netzwerkknoten (16b) gemeinsam genutzt wird, auf einen Referenzleistungspegel festgelegt ist.

4. Verfahren nach einem der Ansprüche 1 bis 3, wobei das Spektrum, das durch den ersten RAT-Netzwerkknoten (16a) und den zweiten RAT-Netzwerkknoten (16b) gemeinsam genutzt wird, eine dedizierte Signalisierung für den zweiten RAT-Netzwerkknoten (16b) einschließt.

5. Verfahren nach Anspruch 4, wobei die dedizierte Signalisierung zellenspezifischen Referenzsignalen, CRS, entspricht.

6. Verfahren nach einem der Ansprüche 1 bis 5, ferner umfassend ein Empfangen einer Vielzahl von zweiten RAT-Parametern, die mit der geschätzten mittleren Leistung für das Spektrum, das durch den ersten RAT-Netzwerkknoten (16a) und den zweiten RAT-Netzwerkknoten (16b) gemeinsam genutzt wird, verknüpft sind; und wobei die mindestens eine Aktion ein Modifizieren der geschätzten Leistung basierend auf der Vielzahl von zweiten RAT-Parametern einschließt.

7. Verfahren nach Anspruch 6, wobei die Vielzahl von zweiten RAT-Parametern einschließt:

   einen ersten Parameter, der ein Leistungsverhältnis zwischen einer ersten Art von Ressourcen eines gemeinsam genutzten physischen Downlink-Kanals, PDSCH, und einer zweiten Art von PDSCH-Ressourcen angibt; und
   einen zweiten Parameter, der einen Referenzleistungspegel für die zweite Art von PDSCH-Ressourcen angibt.

8. Verfahren nach einem der Ansprüche 1 bis 7, wobei die erste RAT-Übertragung einer Übertragung des gemeinsam genutzten physischen Downlink-Kanals, PDSCH, auf einer ersten Art von PDSCH-Ressourcen entspricht; und die zweite RAT-Übertragung einer PDSCH-Übertragung auf einer zweiten Art von PDSCH-Ressourcen entspricht.

9. Verfahren nach einem der Ansprüche 1 bis 8, wobei das vordefinierte Kriterium eine maximale mittlere Leistungsgrenze umfasst, wobei das vordefinierte Kriterium basierend auf einer mittleren Leistung erfüllt ist, die kleiner als oder gleich der maximalen mittleren Leistungsgrenze ist.

10. Computerlesbares Medium (44), umfassend Codeabschnitte, die, wenn sie auf einem Prozessor (42) eines ersten Funkzugangstechnologie-Netzwerkknotens, RAT-Netzwerkknoten, (16a) ausgeführt werden, den Prozessor konfigurieren, um die Schritte eines Verfahrens nach einem der Ansprüche 1 bis 9 durchzuführen.

11. Erster Funkzugangstechnologie-Netzwerkknoten, RAT-Netzwerkknoten, (16a) für die gemeinsame Nutzung des Spektrums mit einem zweiten RAT-Netzwerkknoten (16b), wobei der erste RAT-Netzwerkknoten (16a) einschließt: Verarbeitungsschaltlogik (40), die konfiguriert ist, um alle Schritte eines Verfahrens nach einem der Ansprüche 1 bis 9 durchzuführen.

**Revendications**

1. Procédé implémenté par un premier nœud de réseau de technologie d'accès radio, RAT (16a), destiné à un partage de spectre avec un second nœud de réseau RAT (16b), le procédé comprenant :

   le fait de déterminer si une puissance estimée pour une première transmission RAT sur au moins un élément de ressource, RE, dans un spectre partagé par le premier nœud de réseau RAT (16a) et le second nœud de réseau RAT (16b) permet à une puissance moyenne estimée pour le spectre partagé de respecter un critère prédéfini ; et la mise en œuvre d'au moins une action en fonction au moins en partie de la détermination quant à savoir si la puissance moyenne estimée pour le spectre partagé respecte le critère prédéfini, dans lequel :

   - l'au moins une action est configurée pour permettre à un gain de signaux de référence spécifiques à la cellule, CRS, pour un RE transportant le CRS d'être au-dessus d'un seuil ; et
   - l'au moins une action comporte la réduction d'une puissance par élément de ressource, RE, sur une première pluralité de RE associés au premier nœud de réseau RAT (16a) ; et une puissance par RE sur une seconde pluralité de RE associés au second nœud de réseau RAT (16b) étant réduite.

2. Procédé selon la revendication 1, dans lequel une quantité de puissance globale réduite par la réduction de la puissance par RE sur les première et seconde pluralités de RE est au moins l'une parmi inférieure à et égale à 0,4 dB.

3. Procédé selon la revendication 1 ou 2, dans lequel un niveau de puissance pour une seconde transmission RAT dans le spectre partagé par le premier nœud de réseau RAT (16a) et le second nœud de réseau RAT (16b) est fixé à un niveau de puissance de référence.

4. Procédé selon l'une quelconque des revendications 1 à 3, dans lequel le spectre partagé par le premier nœud de réseau RAT (16a) et le second nœud de réseau RAT (16b) comporte une signalisation dédiée pour le second nœud de réseau RAT (16b).

5. Procédé selon la revendication 4, dans lequel la signalisation dédiée correspond à des signaux de référence spécifiques à la cellule, CRS.

6. Procédé selon l'une quelconque des revendications 1 à 5, comprenant en outre la réception d'une pluralité de seconds paramètres RAT associés à la puissance moyenne estimée pour le spectre partagé par le premier nœud de réseau RAT (16a) et le second nœud de réseau RAT (16b) ; et l'au moins une action comportant la modification de la puissance estimée en fonction de la pluralité de seconds paramètres RAT.

7. Procédé selon la revendication 6, dans lequel la pluralité de seconds paramètres RAT comporte :

   un premier paramètre qui spécifie une relation de puissance entre un premier type de ressources de canal partagé de liaison descendante physique, PDSCH, et un second type de ressources PDSCH ; et un second paramètre qui spécifie un niveau de puissance de référence pour le second type de ressources PDSCH.

8. Procédé selon l'une quelconque des revendications 1 à 7, dans lequel la première transmission RAT correspond à une transmission en canal partagé de liaison descendante physique, PDSCH, sur un premier type de ressources PDSCH ; et

la seconde transmission RAT correspond à une transmission PDSCH sur un second type de ressources PDSCH.

9. Procédé selon l'une quelconque des revendications 1 à 8, dans lequel le critère prédéfini comporte une limite de puissance moyenne maximale, le critère prédéfini étant respecté en fonction d'une puissance moyenne étant inférieure ou égale à la limite de puissance moyenne maximale.

10. Support lisible par ordinateur (44) comprenant des parties de code qui, lorsqu'elles sont exécutées sur un processeur (42) d'un premier nœud de réseau de technologie d'accès radio, RAT (16a), configurent le processeur pour mettre en œuvre les étapes d'un procédé selon l'une quelconque des revendications 1 à 9.

11. Premier nœud de réseau de technologie d'accès radio, RAT (16a), destiné à un partage de spectre avec un second nœud de réseau RAT (16b), le premier nœud de réseau RAT (16a) comporte :

un système de circuit de traitement (40) configuré pour mettre en œuvre toutes les étapes d'un procédé selon l'une quelconque des revendications 1 à 9.

FIG. 1

FIG. 2

**Wireless Device 24**

SW 58

HW 48

Radio interface 50

Processing circuitry 52

Memory 54

Processor 56

**Second RAT Network Node 16b**

SW 46

HW 34

Communication Interface 36

Radio interface 38

Processing circuitry 40

Memory 44

Processor 42

Reference Signal Unit 32

**First RAT Network Node 16a**

SW 46

HW 34

Communication interface 36

Radio interface 38

Processing circuitry 40

Memory 44

Processor 42

Power Handling Unit 30

*10*

# FIG. 3

BEGIN

Determine whether an estimated power for first RAT transmission on at least one resource element, RE, in a spectrum shared by the first RAT node and second RAT node allows for an estimated mean power for the shared spectrum to meet a predefined criterion
S100

Perform at least one action based at least in part on the determination whether the estimated mean power for the shared spectrum meets the predefined criterion
S102

END

## FIG. 4

BEGIN

Optionally cause transmission of values for a plurality of parameters associated related to power handling in a shared spectrum
S104

Optionally reduce at least one value for at least one of the plurality of parameters to avoid power over-allocation
S106

END

## FIG. 5

crsGain = 3dB ($\rho_A$=0.5)
No boost of PDSCH type B
necessary, $\rho_B/\rho_A$= 1

PDSCH_a[W / RE] = $\rho_A$*RS[W / RE]

PDSCH_b[W / RE] = ($\rho_A/\rho_A$)*RS[W / RE]

PDSCH type B REs has power =
($\rho_B/\rho_A$)*PSD$_A$=Pref

Fixed reference level:
PDSCH type A REs
Each RE has power = Pref [W]

Empty RE

RS RE has power =
2*Pref

Pref

FIG. 6

EP 4 275 402 B1

crsGain = 4.77dB ($\rho_A$=1/3)

$\rho_B/\rho_A$= 1/2

pdschTypeBGain = ¾ gives
overallocation 40.45W, $\rho_B/\rho_A$= ½ is
used to reduce power to 39.03W

PDSCH_a[W / RE] = $\rho_A$*RS[W / RE]

PDSCH_b[W / RE] = ($\rho_A/\rho_A$)*RS[W / RE]

PDSCH type B REs has power =
($\rho_A/\rho_A$)*PSD$_A$ = (1/2)*Pref

Fixed reference level:
PDSCH type A REs
Each RE has power = PSD$_A$ = Pref [W]

RS RE
Has power = 3*Pref

Pref

Empty RE

FIG. 7

| NR Grid | LTE Grid |
|---------|----------|
| PRB #51 | |
| PRB #50 | PRB #49 |
| PRB #49 | PRB #48 |
| PRB #48 | |
| | |
| PRB #26 | PRB #26 |
| PRB #25 | PRB #25 |
| PRB #24 | PRB #24 |
| PRB #23 | PRB #23 |
| PRB #22 | PRB #22 |
| PRB #21 | PRB #21 |
| | |
| PRB #1 | PRB #1 |
| PRB #0 | PRB #0 |

Legend:
- Assigned to NR
- Assigned to LTE
- Unused
- Unavailable Guardband

FIG. 8

**EP 4 275 402 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2572651 A